# EUROPEAN PATENT SPECIFICATION

(11) **EP 1 272 772 B1**
(45) Date of publication and mention of the grant of the patent: **21.12.2005**
(21) Application number: 01933698.1
(22) Date of filing: 14.03.2001
(51) Int. Cl.: F16D 65/092, F16D 65/12, F16D 65/10, F16D 65/08

(54) **BRAKING COMPONENTS, PARTICULARLY FOR VEHICLE BRAKES**
BREMSKOMPONENTEN, INSBESONDERE FÜR FAHRZEUGBREMSEN
COMPOSANTS DE FREINAGE DESTINES PARTICULIEREMENT A DES FREINS DE VEHICULES

(30) Priority: 13.04.2000 IT PD20000090
(43) Date of publication of application: 08.01.2003
(73) Proprietor: Pareti, Vittorio, 82211 Herrsching (DE)
(72) Inventor: Pareti, Vittorio, 82211 Herrsching (DE)
(74) Representative: Modiano, Micaela Nadia
(86) International application number: PCT/EP2001/002879
(87) International publication number: WO 2001/079721

(56) References cited:
- WO-A-97/18176
- GB-A- 1 492 712
- GB-A- 2 125 126
- US-A- 3 894 863
- US-A- 5 242 746
- US-A- 5 407 036
- US-A- 5 856 390

## Description

### Technical field

The present invention relates to braking components, particularly for vehicle brakes.

### Background art

In particular, the invention can be applied to disc and/or drum brakes for motor vehicles, motorcycles, trains, aircraft, et cetera.

The braking systems currently most widely used in terrestrial vehicles comprise friction brakes, such as disc brakes which use pads, and drum brakes which use shoes.

Currently commercially available pads can assume various shapes, depending on the manufacturer, but they are substantially constituted by a support made of metallic material and by a braking element which, during the braking action, makes contact with the disc being rigidly coupled to the wheel.

Shoes, too, can assume various shapes, depending on the manufacturer, and are substantially constituted by a support made of metallic material and by a braking element which, during the braking action, makes contact with the internal surface of a drum being rigidly coupled to the wheel of the vehicle.

It is known that during the braking action the kinetic energy of the wheel and therefore of the corresponding disc and/or drum is converted into heat.

Pads and shoes are thus subject to considerable temperature increases which, in critical conditions, can even lead to a reduction in their mechanical properties.

Moreover, vibrations are transmitted rigidly between the disc and the pads and between the drum and the shoes.

U.S. patent n. 5,242,746 discloses a multi-layer friction element consisting of carbon-carbon composite material comprising a structure layer of so-called "coarse" texture comprising segments of rovings and at least one friction layer of so-called "fine" texture comprising fibre segments.

G.B. Patent n. 2,125,126 discloses a disk brake pad comprising a friction member attached to a lining and a thermally insulating member comprising e.g. a flexible graphite layer to reduce the transmission of frictional heat. The graphite layer may be provided with a protective layer on its outer surface or on both of its surfaces. The protective layer may be of stainless steel, chrome-plated steel plate or fibre reinforced synthetic resin plate; and the friction member may be of asbestos type or steel wool type.

### Disclosure of the Invention

The aim of the present invention is to solve or substantially reduce the problems of conventional pads and/or shoes.

Within this aim, an important object of the invention is to provide a pad which allows to minimize the transmission of heat between the pad and the supporting caliper.

Another object of the invention is to provide a pad and/or shoe which is less subject to temperature increase and more resistant in critical operating conditions.

Another object of the invention is to provide a pad which also allows vibration damping.

This aim and these and other objects which will become better apparent hereinafter are achieved by the features of claims 1, 5 and 6.

### Brief description of the drawings

Further characteristics and advantages of the present invention will become better apparent from the following detailed description of a preferred but not exclusive embodiment thereof, illustrated only by way of non-limitative example in the accompanying drawings, wherein:
Figure 1 is a perspective view of a pad for disc brakes according to the invention;
Figures 2 and 3 are side views of a first embodiment and a second embodiment, respectively, of the pad of Figure 1;
Figure 4 is a view of a drum brake which uses a shoe according to the invention;
Figure 5 is a perspective view of a shoe of the brake of Figure 4.

### Ways of carrying out the Invention

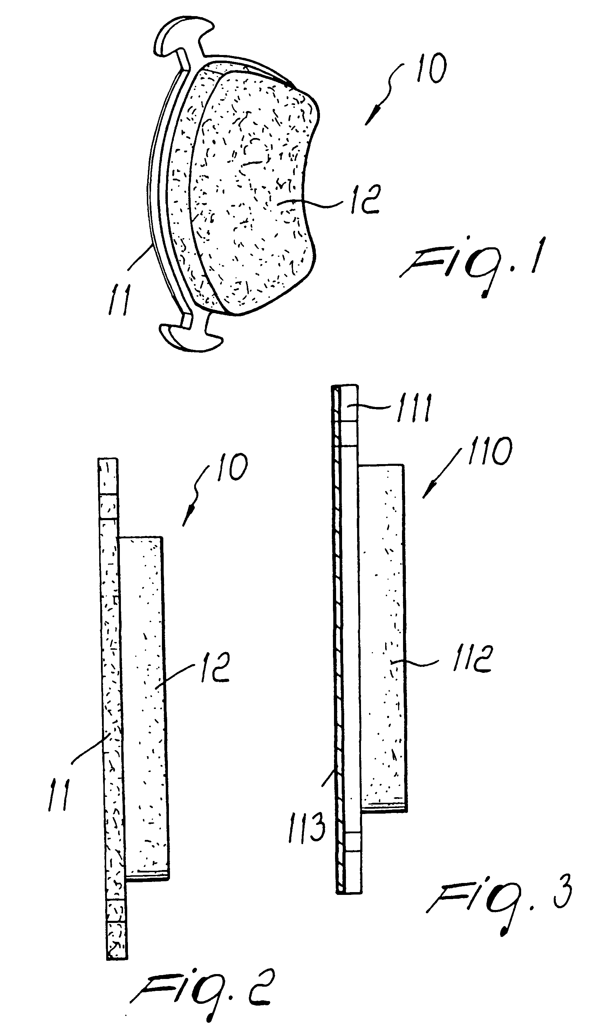

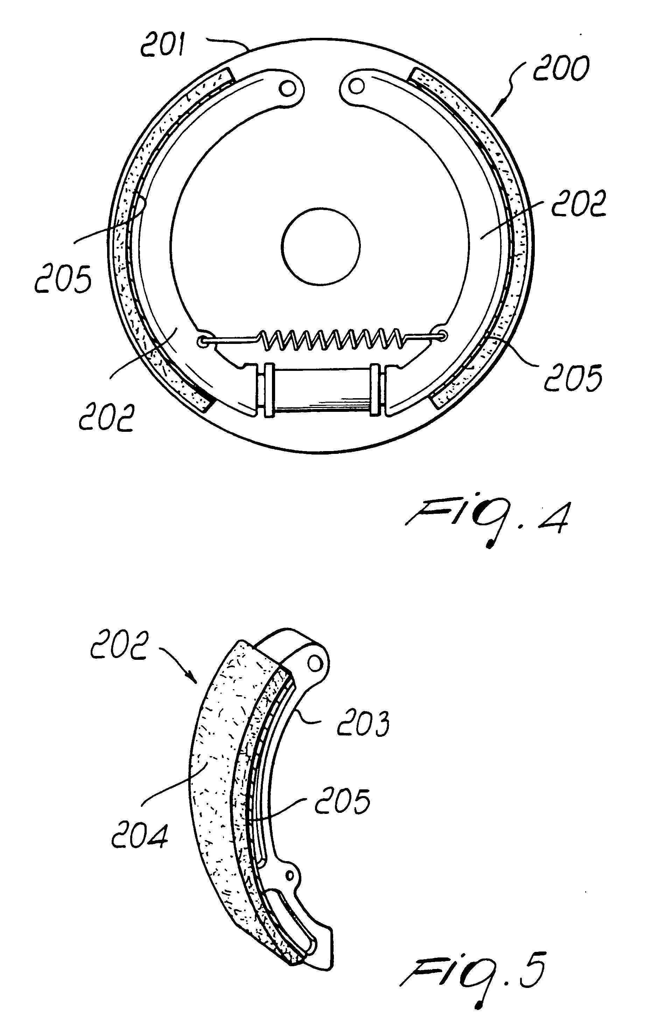

With particular reference to Figures 1 and 2, a braking component according to the invention is constituted by a pad for disc brakes, which is generally designated by the reference numeral 10.

The pad 10 is constituted by a supporting element 11 for a braking element 12.

The supporting element 11 is obtained by superimposing and fixing a plurality of layers of carbon, which in this case are constituted by a weave of strands, each comprising a plurality of filaments, of which at least one is made of carbon fiber and at least one is made of metal.

Each of the layers has a thickness between 0,5 and 2mm.

The various layers of weave can be hot- or cold-glued by impregnation with epoxy resin.

Alternatively, they can be joined by pressure molding.

Advantageously, the braking element 12 is a sintered element comprising a percentage of carbon powder which can vary between 4 and 15% and is mixed with the other materials that are commonly used.

Advantageously, the brake disc can be covered with a layer of carbon fiber impregnated with epoxy resin.

The resin can be the means of adhesion between the covering and the metal.

Alternatively, a double-adhesive sheet can be used.

Figure 3 illustrates a second embodiment of the pad, now designated by the reference numeral 110.

The pad 110 is constituted by a supporting element 111 for a sintered braking element 112.

In this case, the supporting element 111 is made of metallic material and the surface that makes contact with the caliper is covered with a layer of carbon which in this case is constituted by a weave 113 constituted by strands which comprise a plurality of filaments, of which at least one is made of carbon fiber and at least one is made of metal.

The layer of weave 113 can be hot- or cold-glued to the supporting element 111 or alternatively be assembled by pressure molding.

Alternatively, a double-adhesive sheet can be used for gluing.

Advantageously, the layer of weave 113, or the layers of weave that constitute the supporting element 111, can be made of filaments of a metallic material which allows welding.

Also the sintered braking element 112 contains a percentage of carbon powder varying between 4 and 15%.

The weave is in any case normally applied by pressure molding at 80-140 °C.

Figure 4 illustrates a drum brake, generally designated by the reference numeral 200, comprising a braking component which, in this case, is constituted by a pair of shoes.

The brake 200 is substantially constituted by two shoes 201 being arranged inside a drum 202 which is rigidly coupled to a wheel, not shown in the figure.

Each shoe is constituted by an arc-shaped supporting element 203 made of metallic material and rigidly supports, in the portion that faces the drum 201, a braking element 204.

Like the above-described braking elements 12 and 112, the braking element 204 is a sintered element comprising a percentage of carbon powder which can vary between 4 and 15% and is mixed with the other materials commonly used to produce braking elements of pads and shoes.

The supporting element 203 is obtained by superimposing and fixing a plurality of layers of carbon which, in this case too, are constituted by a weave of strands, each of which comprises a plurality of filaments, of which at least one is made of carbon fiber and at least one is made of metal.

The methods for fixing the various layers that constitute the supporting element 203 can be the same used for the supporting element 11 of the pad 10.

A layer 205 of carbon fiber can be interposed between the supporting element 203 and the braking element 204.

Advantageously, the surface of the drum on which the braking element acts can be covered with a layer of weave made of carbon fiber impregnated with an epoxy resin which can also act as an element for bonding with the metal.

Alternatively, a double-adhesive sheet can be used for gluing.

In practice it has been observed that the present invention has achieved its intended aim and objects.

In particular, by providing supporting elements made of carbon fiber weaves it is possible to obtain pads and shoes which provide high heat resistance.

The use of a layer of weave with strands partially made of carbon fiber also allows to appropriately insulate a conventional pad from the supporting caliper.

Moreover, the provision of a sintered braking element comprising a given percentage of carbon powder allows to optimize the behavior of the pad and of the shoe at high temperatures.

Pads or shoes using a supporting element and a braking element constituted by a sintered element, such as the ones described above, can be used in any kind of motor vehicle and motorcycle, as well as in the landing gear of aircraft, in trains, and in many other applications.

The present invention is susceptible of numerous modifications and variations, all of which are within the scope of the same inventive concept.

The technical details may be replaced with other technically equivalent elements; moreover, the materials and the dimensions may be any according to requirements, so long as they are compatible with the contingent use.

The disclosures in Italian Patent Application No. PD2000A000090 from which this application claims priority are incorporated herein by reference.

## Claims

1. A braking component (10), particularly for vehicle brakes, constituted by a supporting element (11) and a braking element (12), said supporting element (11) being constituted by a plurality of layers, **characterized in that** said layers are made of a weave of strands, each of which comprises a plurality of filaments, of which at least one is made of carbon fiber and at least one is made of metal.

2. The braking component (10) according to claim 1, **characterized in that** the strands of said fabric comprise a plurality of filaments made of a metal that can be welded.

3. The braking component (10) according to one or more of the preceding claims, **characterized in that** each layer has a thickness between 0.4 and 2 mm.

4. The braking component (10) according to claim 1, **characterized in that** said braking element (12) is a sintered element which comprises powdered carbon in a percentage between 4 and 15%.

5. A pad (110) for disc brakes comprising a metallic supporting element (111) and a braking element (112), the metallic supporting element (111) comprising on the surface that face the supporting caliper at least one layer (113), according to one or more of claims 1 to 3.

6. A shoe (201) for drum brakes (200) comprising a supporting element (203) and a braking element (204), said supporting element (203) being obtained by a plurality of layers, according to one or more of claims 1 to 3.

7. The shoe for drum brakes (200) according to claim 6, comprising a layer (205) of carbon fiber which is interposed between the supporting element (203) and the braking element (204).

## Patentansprüche

1. Bremskomponente (10), insbesondere für Fahrzeugbremsen, die aus einem Stützelement (11) und einem Bremselement (12) besteht, wobei das Stützelement (11) aus einer Vielzahl von Schichten gebildet ist, **dadurch gekennzeichnet, daß** die Schichten aus einem Gewebe von Strängen bestehen, von denen jeder eine Vielzahl von Fäden umfaßt, von denen mindestens einer aus Kohlenstoffaser besteht und mindestens einer aus Metall besteht.

2. Bremskomponente (10) nach Anspruch 1, **dadurch gekennzeichnet, daß** die Stränge des Gewebes eine Vielzahl von Fäden umfassen, die aus einem Metall bestehen, das geschweißt werden kann.

3. Bremskomponente 10 nach einem oder mehreren der vorangehenden Ansprüche, **dadurch gekennzeichnet, daß** jede Schicht eine Dicke zwischen 0,4 und 2 mm aufweist.

4. Bremskomponente (10) nach Anspruch 1, **dadurch gekennzeichnet, daß** das Bremselement (12) ein gesintertes Element ist, das pulverförmigen Kohlenstoff in einem Prozentsatz zwischen 4 und 15% umfaßt.

5. Bremsklotz (110) für Scheibenbremsen mit einem metallischen Stützelement (111) und einem Bremselement (112), wobei das metallische Stützelement (111) auf der Oberfläche, die dem Stützbremssattel zugewandt ist, mindestens eine Schicht (113) nach einem oder mehreren der Ansprüche 1 bis 3 umfaßt.

6. Backe (201) für Trommelbremsen (200) mit einem Stützelement (203) und einem Bremselement (204), wobei das Stützelement (203) durch eine Vielzahl von Schichten nach einem oder mehreren der Ansprüche 1 bis 3 erhalten wird.

7. Backe für Trommelbremsen (200) nach Anspruch 6 mit einer Schicht (205) aus Kohlenstoffaser, die zwischen das Stützelement (203) und das Bremselement (204) eingefügt ist.

## Revendications

1. Composant de freinage (10), en particulier, pour freins de véhicule constitué par un élément support (11) et un élément de freinage (12), ledit élément support (11) étant constitué par une pluralité de couches, **caractérisé en ce que** lesdites couches sont réalisées à partir de brins tissés, chacun d'eux comprenant une pluralité de filaments, parmi lesquels au moins l'un est réalisé à base de fibre de carbone et au moins l'un est réalisé à base de métal.

2. Composant de freinage (10) selon la revendication 1, **caractérisé en ce que** les brins dudit tissu comprennent une pluralité de filaments réalisés à base d'un métal qui peut être soudé.

3. Composant de freinage (10) selon une ou plusieurs des revendications précédentes, **caractérisé en ce que** chaque couche présente une épaisseur comprise entre 0,4 et 2 mm.

4. Composant de freinage (10) selon la revendication 1, **caractérisé en ce que** ledit élément de freinage (12) est un élément fritté qui comprend du carbone en poudre en un pourcentage compris entre 4 et 15 %.

5. Plaquette (110) pour frein à disque comprenant un élément support métallique (111) et un élément de freinage (112), l'élément support métallique (111) comprenant, sur la surface qui est face à l'étrier support, au moins une couche (113) selon une ou plusieurs des revendications 1 à 3.

6. Sabot (201) pour frein à tambour (200) comprenant un élément support (203) et un élément de freinage (204), ledit élément support (203) étant obtenu par une pluralité de couches selon une ou plusieurs des revendications 1 à 3.

7. Sabot pour frein à tambour (200) selon la revendication 6, comprenant une couche (205) de fibres de carbone qui est interposée entre l'élément support (203) et l'élément de freinage (204).
